# EUROPÄISCHE PATENTSCHRIFT

(11) **EP 2 058 162 B1**
(45) Veröffentlichungstag und Bekanntmachung des Hinweises auf die Patenterteilung: **16.01.2019**
(21) Anmeldenummer: 08019502.7
(22) Anmeldetag: 07.11.2008
(51) Int. Cl.: B60K 35/00, G06F 3/048

(54) **Multifunktionsanzeige- und Bediensystem und Verfahren zum Bedienen von Funktionen oder Fahrzeugsystemen mit einem assistierten Bedienmodus**
Multifunctional display and operating system and method for operating functions or vehicle systems with an assisted operating mode
Système d'affichage et de commande multifonctions et procédé de commande de fonctions ou de systèmes de véhicules dotés d'un mode de commande assisté

(30) Priorität: 08.11.2007 DE 102007054310
(43) Veröffentlichungstag der Anmeldung: 13.05.2009
(73) Patentinhaber: Volkswagen Aktiengesellschaft, 38440 Wolfsburg (DE)
(72) Erfinder: Wäller, Christoph, 38102 Braunschweig (DE); Bachfischer, Katharina, 40027 Düsseldorf (DE); Salzer, Mike, 38440 Wolfsburg (DE)
(74) Vertreter: Patentanwälte Bressel und Partner mbB

(56) Entgegenhaltungen:
- DE-A1-102006 037 156

## Beschreibung

Multifunktionsanzeige- und Bediensystem und Verfahren zum Bedienen von Funktionen oder Fahrzeugsystemen mit einem assistierten Bedienmodus
Die Erfindung betrifft ein Multifunktionsanzeige- und Bediensystem zum Vermitteln von Informationen und Erfassen von Betätigungshandlungen für eine Steuerung von Funktionen und/oder Fahrzeugsystemen eines Kraftfahrzeugs nach dem Oberbegriff des Patentanspruchs 1 sowie ein Verfahren zum Bedienen von Funktionen und/oder Fahrzeugsystemen eines Kraftfahrzeugs mittels eines Multifunktionsanzeige- und Bediensystems mit den Merkmalen des Oberbegriffs des Patentanspruchs 9. Multifunktionsanzeige- und Bediensysteme werden in Kraftfahrzeugen verwendet, um an einen Nutzer Informationen auszugeben. Ein Teil dieser Informationen dient lediglich zur Unterrichtung des Nutzers. Solche Informationen werden im Folgenden als Ausgabeinformationen bezeichnet. Darüber hinaus werden Multifunktionsanzeige- und Bediensysteme in Kraftfahrzeugen verwendet, um Funktionen und/oder Fahrzeugsysteme zu steuern. Hierbei werden mittels des Multifunktionsanzeige- und Bediensystems Betätigungshandlungen erfasst und in Steuerbefehle umgesetzt. Hierfür sind Systeme bekannt, bei denen die Erfassung von Betätigungshandlungen ein Erfassen einer Position eines Betätigungselementes relativ zu einer Anzeigefläche einer Anzeigevorrichtung umfasst. Mit der erfassten Position wird anhand von einer Logik ein zugehöriger Steuerbefehl erzeugt, mit dem die Funktion und/oder das Fahrzeugsystem des Kraftfahrzeugs gesteuert wird. Aus einer Korrelation der so erfassten Position mit dargestellten so genannten Eingabeinformationen, die Bedieninformationen, beispielsweise Angaben über Bedienmöglichkeiten und insbesondere grafisch dargestellte Bedienelemente, umfassen, wird der Berührposition ein den grafisch dargestellten Eingabeinformationen (Bedieninformationen) zugeordneter Steuerbefehl zugewiesen. In der Regel ist die Positionserfassungseinheit mit der Anzeigevorrichtung in der Weise gekoppelt, dass diese einen so genannten Touchscreen darstellen. Bei einem Touchscreen wird eine Berührposition der Anzeigefläche ermittelt. Eine Korrelation zwischen der Berührposition und den Bedieninformationen erfolgt über eine Darstellungsposition der entsprechenden Bedieninformationen in der Logik. Liegt eine Berührposition beispielsweise in einem Darstellungsgebiet eines Bedienelementes, dem eine bestimmte Funktion zugeordnet ist, so wird eine Berührung der Anzeigefläche im Darstellungsbereich dieses Bedienelementes die entsprechende Funktion ausgelöst und/oder aktiviert.

Grundsätzlich besteht eine Konkurrenzsituation zwischen der Möglichkeit, eine möglichst große Anzahl von Ausgabeinformationen auf der Anzeigefläche der Anzeigevorrichtung darzustellen und einem Bedürfnis, eine möglichst große Fläche der Anzeigefläche für eine Darstellung von Bedieninformationen, insbesondere von Bedienelementen, zur Verfügung zu haben.
Aus der DE 10 2005 056 459 A1 ist ein Bediensystem für ein Fahrzeug bekannt, mit einem als Touchpad ausgeführten manuellen Bedienungsmittel zur Auswahl und/oder Aktivierung von Einträgen, dessen Fläche zur Erfassung eines Aufsetzpunktes eines benutzergeführten Steuerelementes in einzelne Eingabefelder unterteilt ist, und einer Bildschirmanzeige mit mindestens einem Feld zur Darstellung der Einträge. Dort ist eine Auswerte- und Steuereinheit beschrieben, welche mindestens ein Eingabefeld einem Eintrag zuordnet, durch Auswerten von Signalen der Eingabefelder den Aufsetzpunkt des Steuerelementes und das den wesentlichen Teil des Aufsetzpunktes umfassende Eingabefeld ermittelt, wobei die Auswerte- und Steuereinheit die Fläche der Eingabefelder in Abhängigkeit vom ermittelten Aufsetzpunkt so anpasst, dass die wirksame Fläche des den wesentlichen Teil des Aufsetzpunktes umfassenden Eingabefeldes vergrößert ist. Eine Berührung eines Eingabefelds führt somit zu einer vergrößerten Darstellung des entsprechenden Eingabefelds. Durch eine Vergrößerung des Eingabefeldes, so dass diese den Berührpunkt vollständig umfasst, soll sichergestellt werden, dass bei einer minimalen Bewegung des Steuerungselements nicht versehentlich ein benachbartes Eingabefeld betätigt wird.

Die gattungsbildende DE 10 2006 037 156A1 betrifft eine interaktive Bedienvorrichtung mit einer Anzeigevorrichtung und ein Verfahren zum Betreiben der interaktiven Bedienvorrichtung. Das Verfahren umfasst folgende Schritte: Anzeigen von graphischen Informationen auf der Anzeigevorrichtung; Empfangen von Sensorinformationen; Aktivieren einer Bedienaktion, wenn anhand der Sensorinformationen ermittelt wird, dass ein Körperteil eines Nutzers sich innerhalb eines Aktivierungsbereichs befindet, der räumlich relativ zu einem Darstellungsgebiet eines Bedienelements auf der Anzeigevorrichtung festgelegt ist, dem die Bedienaktion zugeordnet ist; wobei die empfangenen Sensorinformationen Nutzerinformationen umfassen, die zum Ermitteln einer Bedienabsicht für das mindestens eine Bedienelement zeitlich vor einem Aktivieren der Bedienaktion ausgewertet werden; und die auf der Anzeigevorrichtung dargestellten Informationen in Abhängigkeit von der ermittelten Bedienabsicht angepasst werden, so dass das mindestens eine Bedienelement optimiert für das Aktivieren der dem Bedienelement zugeordneten Bedienaktion dargestellt wird.

Aus der DE 100 15 726 A1 ist ein Fahrerassistenzsystem mit einer Bildschirmanzeige bekannt, die über ein Anzeige-Steuergerät angesteuert wird. Jedes Bedienelement in dem dort beschriebenen Fahrzeug ist mit einem integrierten Näherungsschalter ausgebildet und verfügt über eine Busschnittstelle, mit der es an einen Datenbus angeschlossen ist. An diesen Datenbus sind ebenfalls das Anzeige-Steuergerät und in einer bevorzugten Ausführungsform die zu den jeweiligen Schaltern zugeordneten Geräte bzw. Aktoren angeschlossen, so dass zwischen allen angeschlossenen Einheiten ein Informationsaustausch möglich ist. Möchte der Fahrer des Fahrzeugs eines dieser Bedienelemente betätigen, so wird in der Bildschirmanzeige bei Annäherung des Fingers des Fahrers an den integrierten Näherungsschalter die Funktion des Bedienelementes in einer grafischen Darstellung in vergrößerter Art und Weise auf dem Bildschirm angezeigt. Für diese Vergrößerung steht die ganze Fläche der Bildschirmanzeige zur Verfügung.

Bei der beschriebenen Ausführungsform werden zwar Bedieninformationen angezeigt, die Informationen umfassen, welche über eine Folge/Wirkung einer Betätigung eines von der Anzeigefläche getrennt ausgebildeten Bedienelements informiert und hierüber eine Auswahl des geeigneten Bedienelementes erleichtert, jedoch wird einem Bedürfnis, eine möglichst große Fläche der Anzeigevorrichtung für eine Vermittlung von nicht mit einer aktuellen Betätigungshandlung verbundenen Informationen darzustellen, nicht geeignet Rechnung getragen.

Aufgabe der Erfindung ist es daher, ein Multifunktionsanzeige- und Bediensystem für ein Kraftfahrzeug zu schaffen, mit dem eine möglichst gute Informationsvermittlung von Ausgabeinformationen und zugleich eine zuverlässige und sichere Erfassung von Betätigungshandlungen möglich ist. Die Aufgabe wird erfindungsgemäß durch ein Multifunktionsanzeige- und Bediensystem mit den Merkmalen des Patentanspruchs 1 sowie ein Verfahren mit den Merkmalen des Patentanspruchs 9 gelöst. Vorteilhafte Ausgestaltungen der Erfindung ergeben sich aus den Unteransprüchen.

Hierfür wird ein Multifunktionsanzeige- und Bediensystem zum Vermitteln von Informationen und Erfassen von Betätigungshandlungen für eine Steuerung von Funktionen und/oder Fahrzeugsystemen eines Kraftfahrzeugs vorgeschlagen, umfassend eine Anzeigevorrichtung, eine mit der Anzeigevorrichtung gekoppelte Steuereinheit zum Steuern einer Anzeige von Informationen auf einer Anzeigefläche der Anzeigevorrichtung, eine mit der Anzeigevorrichtung und der Steuereinheit gekoppelte Positionserfassungseinheit zum Erfassen einer Position eines Betätigungselementes relativ zu der Anzeigefläche, wobei die Steuereinheit eine Logik umfasst, die in Abhängigkeit von der erfassten Position des Betätigungselements relativ zu den auf der Anzeigefläche dargestellten Informationen Steuerbefehle für eine Bedienung der Funktionen und/oder der Fahrzeugsysteme erzeugt, wobei die Steuereinheit eine Kontextauswertungseinheit umfasst, die Zustandsinformationen erfasst und auswertet und entsprechend der Auswertung in einem Bedienmodus eine Größe eines Eingabeanteils der Anzeigefläche für ein Anzeigen von Bedieninformationen und eine Größe eines Ausgabeanteils der Anzeigefläche für ein Ausgeben von Ausgabeinformationen festlegt, wobei die Logik ausgebildet ist, dass mit Bedieninformationen korrelierte erfasste Positionen des Betätigungselementes für ein Erzeugen von Steuerbefehlen genutzt werden. Es ist somit für ein Bedienen von Funktionen und/oder Fahrzeugsystemen eines Kraftfahrzeugs mittels eines Multifunktionsanzeige- und Bediensystems, wobei das Multifunktionsanzeige- und Bediensystem eine Anzeigevorrichtung zum Vermitteln von Informationen und eine mit der Anzeigevorrichtung gekoppelte Positionserfassungseinheit zum Erfassen einer Position eines Betätigungselements relativ zu der Anzeigefläche umfasst, vorgesehen, folgende Schritte auszuführen: Anzeigen von Informationen auf der Anzeigefläche und Erfassen von Betätigungshandlungen eines Nutzers mittels des Erfassens einer Position des Betätigungselements des Nutzers und Erzeugen von Steuerbefehlen für eine Bedienung der Funktionen und/oder Fahrzeugsystemen in Abhängigkeit von der erfassten Position des Betätigungselements relativ zu den auf der Anzeigefläche dargestellten Informationen, wobei Zustandsinformationen erfasst und ausgewertet werden und entsprechend der Auswertung in einem Bedienmodus eine Größe eines Eingabeanteils der Anzeigefläche für ein Anzeigen von Eingabeinformationen (Bedieninformationen) und eine Größe eines Ausgabeanteils der Anzeigefläche für ein Ausgeben von Ausgabeinformationen festgelegt wird. Vorteilhafterweise wird somit ein Flächenanteil der Anzeigefläche, der in einem Bedienmodus für Bedieninformationen zur Verfügung steht, dynamisch in Abhängigkeit von Zustandsinformationen ermittelt. Als Zustandsinformationen können sämtliche Informationen erfasst werden, die einen Fahrzeugzustand, einen Fahrerzustand oder einen Umgebungszustand des Kraftfahrzeugs angeben oder aus denen ein solcher ableitbar ist. Ermittelt die Kontextauswertungseinheit einen Normalzustand, so wird die zur Verfügung stehende Anzeigefläche in dem Bedienmodus nach Vorgabewerten zwischen den Eingabeinformationen und den Ausgabeinformationen aufgeteilt. Liegt hingegen ein Bedienzustand vor, bei dem der Nutzer, insbesondere der Fahrer, beispielsweise durch eine Verkehrssituation hinsichtlich seiner Aufmerksamkeit stark beansprucht ist, ist es für eine einfache, sichere und zuverlässige Bedienung vorteilhaft, wenn die Eingabeinformationen (Bedieninformationen) vergrößert dargestellt werden können. Die Kontexterkennungseinheit wird somit anhand der Zustandsinformationen die starke Beanspruchung des Fahrers feststellen und einen Eingabeanteil an der Anzeigefläche zu ungunsten eines Ausgabeanteils vergrößern. Hierdurch ist es möglich, die Bedieninformationen, beispielsweise die Bedienelemente, vergrößert darzustellen. Dennoch ist es in der Regel wünschenswert, auch einen Teil der Anzeigefläche weiterhin zum Ausgeben von Ausgabeinformationen, insbesondere Statusinformationen, zu verwenden. Häufig umfassen die Ausgabeinformationen Informationsinhalte, die, obwohl sie nicht unmittelbar als Bedieninformationen angesehen werden können, jedoch eine Auswahl unter verschiedenen Bedienoptionen und/oder ein Einstellen von Parametern usw. erleichtern und/oder beeinflussen. Eine von den dargestellten Ausgabeinformationen umfasste Umgebungstemperatur des Kraftfahrzeugs kann beispielsweise eine gewünschte Lüfterstufenstellung in einem Bedienmodus eines Lüftungs- und Klimatisierungskontextes mit beeinflussen. Bei ruhiger und entspannter Fahrt kann hierbei vorzugsweise der Ausgabeanteil der Anzeigefläche, über den Statusinformationen oder solche Informationen ausgegeben werden, die eine Bereitstellung einer Funktionalität eines Fahrzeugsystems zuzuordnen sind, ein größerer Flächenanteil eingeräumt werden als in Situationen, in denen ein Fahrer angespannt ist. In einer solchen Situation sollten beispielsweise die zur Verfügung stehenden Bedienelemente vergrößert dargestellt sein, so dass der Eingabeanteil der Anzeigefläche vergrößert werden soll.

Erfindungsgemäß ist vorgesehen, dass in dem Bedienmodus in dem Eingabeanteil der Anzeigefläche ausschließlich Bedieninformationen, welche Bedienelemente umfassen, angezeigt sind und in dem Ausgabeanteil ausschließlich Statusinformationen und/oder Funktionsausgaben einer Funktion eines Fahrzeugsystems dargestellt sind, die über das Multifunktionsanzeige- und Bediensystem ihre Funktionalität bereitstellen oder zu steuern sind. Hierbei ist es vorgesehen, dass die bereitgestellten und genutzten Flächenanteile als zusammenhängende Gebiete festgelegt werden. Eine Gebietsgrenze teilt die Anzeigevorrichtung erfindungsgemäß gemäß einer alternative horizontal oder vertikal. Bei einer anderen erfindungsgemäßen Alternative wird der Eingabeanteil der Anzeigefläche so festgelegt, dass dieser ein zentrales Gebiet, vorzugsweise ein rechteckiges geschlossenes Gebiet der Anzeigefläche umfasst.

Die Verwendung von geschlossenen, d.h. zusammenhängenden Gebieten, die keine Einschlüsse oder Aussparungen aufweisen, bietet den Vorteil, dass es für den Nutzer stark vereinfacht ist, sich zu orientieren. Hierdurch kann er sowohl die Ausgabeinformationen leichter auffinden als auch Bedieninformationen, insbesondere Bedienelemente, von Ausgabeinformationen unterscheiden.

Bei einer bevorzugten Ausführungsform ist eine mit der Steuereinheit gekoppelte Schnittstelle vorgesehen, über die als Zustandsinformationen Daten von Fahrzeugsystemen erfasst werden, die Umgebungszustände, beispielsweise Witterungsbedingungen, Straßenbedingungen, eine Verkehrsdichte, Licht- und/oder Sichtverhältnisse, oder fahrzeuginterne Zustände, beispielsweise eine Geschwindigkeit, einen Lenkwinkel, eine Aktivierung einzelner Fahrzeugsysteme, beispielsweise eines ABS (Antiblockiersystems), eines ESP-Systems (Elektronischen-Stabilitätsprogramm-Systems), einer Fahrzeugbeleuchtung, und/oder Benutzerzustände, beispielsweise eine Lidschlagtätigkeit, eine Herzfrequenz, eine Atemfrequenz, eine Hautleitfähigkeit, eine Identifizierung des Nutzers usw., umfassen.

Bei einer weiteren Ausführungsform ist vorgesehen, dass die Kontextauswertungseinheit anzeige- und bediensysteminterne Zustandsdaten, beispielsweise einen Anzeige- und/oder Bedienkontext, welcher durch das zu bedienende Fahrzeugsystem oder die zu bedienende Fahrzeugfunktion oder Funktionen charakterisiert ist, oder eine Bedienhistorie, erfasst und auswertet. In Abhängigkeit von der zu bedienenden Funktion oder dem zu bedienenden Fahrzeugsystem, d.h. von dem aktuellen Bedienkontext, kann beispielsweise auf eine Sicherheitsrelevanz einer Eingabe geschlossen werden. Je höher eine Relevanz hinsichtlich der Sicherheit des Fahrzustandes ist, desto zuverlässiger muss die Eingabe des Nutzers korrekt erfasst werden. Daher ist es vorteilhaft, sicherheitsrelevante Bedienelemente vergrößert darzustellen, um eine Treffsicherheit für eine Berührung mit dem Betätigungselement im Bereich der Darstellungsposition des Bedienelementes zu erhöhen. Aus einer Bedienhistorie kann beispielsweise abgeleitet werden, wie präzise ein Nutzer ein Zentrum einer Darstellung eines Bedienelements bei einer Betätigung eines Bedienelements berührt. Finden beispielsweise eine Vielzahl von Betätigungen, d.h. von Berührhandlungen, bei einer druckempfindlichen Positionsbestimmungseinheit statt, die keinem dargestellten Bedienelement zugeordnet werden können, so ergibt sich hieraus eine geringe Treffsicherheit des Nutzers. Eine Darstellung der Bedienelemente sollte somit in Abhängigkeit von einer Sicherheitsrelevanz vergrößert erfolgen.

Um einen aktuellen Bedienzustand zuverlässig ermitteln zu können, ist bei einer bevorzugten Ausführungsform vorgesehen, dass die Kontextauswertungseinheit ausgebildet ist, eine mehrdimensionale Verknüpfung der Zustandsinformationen auszuwerten, um die Größe des Eingabeanteils und des Ausgabeanteils festzulegen. Häufig sind die Daten einer einzelnen Zustandsinformation nicht für sich aussagekräftig, um einen Bedienzustand zu charakterisieren. Eine Feststellung des aktuellen Bedienzustands verbessert sich stark, wenn verschiedene unterschiedliche Zustandsinformationen bei der Auswertung miteinander verknüpft werden. Eine solche Verknüpfung wird als mehrdimensionale Verknüpfung bezeichnet, wobei unterschiedliche Zustandsinformationen unterschiedliche Dimensionen darstellen. Um beispielsweise einen Zustand eines Nutzers, insbesondere eines Fahrers, zu ermitteln, ist es vorteilhaft, auf unterschiedliche Arten, d.h. multimodal, erfasste Zustandsinformationen auszuwerten. Beispielsweise können eine Lidschlagfrequenz sowie eine Atemfrequenz in Korrelation als mehrdimensionale Verknüpfung ausgewertet werden, um eine Wachsamkeit und/oder Müdigkeit des Nutzers zu ermitteln. Dieser Nutzerzustand beeinflusst wiederum den aktuellen Bedienzustand. Solange keine konkrete Bedienabsicht des Nutzers vorliegt, ist es besonders vorteilhaft, die gesamte Anzeigefläche zum Ausgeben von Ausgabeinformationen zu nutzen. Dies bedeutet, dass die gesamte Anzeigefläche zum Darstellen von Informationen im Rahmen einer Bereitstellung von Funktionalitäten der Funktionen und/oder Fahrzeugsysteme und/oder zum Ausgeben von Statusinformationen dieser genutzt wird. Liegt eine konkrete Betätigungsabsicht vor, so soll in den Bedienmodus gewechselt werden. Eine bevorzugte Ausführungsform der Erfindung sieht daher vor, dass mit der Steuereinheit eine Annäherungssensorik zum Erfassen einer Annäherung des Betätigungselements an die Anzeigefläche gekoppelt ist und die Steuereinheit ausgebildet ist, bei einer erfassten Annäherung des Betätigungselements an die Anzeigefläche den Bedienmodus zu aktivieren. Bevorzugt wird auch erst bei dieser Annäherung der aktuelle Bedienzustand anhand der Zustandsinformationen ermittelt und hierbei der Ausgabeanteil der Anzeigefläche ermittelt.

Bei einer bevorzugten Ausführungsform ist vorgesehen, dass eine Auswahl der in dem Eingabeanteil dargestellten Bedieninformationen unabhängig von der Größe des Eingabeanteils der Anzeigefläche ist, jedoch deren Darstellungsgrößen abhängig von der Größe des Eingabeanteils sind. Dieses bewirkt, dass eine Orientierung des Nutzers auch in solchen Situationen, in denen ein Bedienzustand anhand der Zustandsinformationen festgestellt ist, der es gebietet, für die Bedienung einen größeren Anteil der Anzeigefläche zu reservieren, die dargestellten Bedieninformationen und Bedienelemente ebenso angeordnet sind, wie in einem Normalbedienzustand oder Modus, so dass eine Umorientierung nicht notwendig ist.

Bei einer anderen Ausführungsform kann vorgesehen sein, dass unterschiedliche Bedienzustände anhand der Zustandsinformationen ermittelt werden und bei Bedienzuständen, die beispielsweise einer noch höheren Anspannung des Fahrers zugeordnet sind, auch eine Reduktion der zur Verfügung gestellten Bedienelemente und Optionen vorgenommen wird.

Bei einer weiteren Ausführungsform ist vorgesehen, dass eine Auswahl der in dem Eingabeanteil dargestellten Bedieninformationen abhängig von einer Größe des Ausgabeanteils ist, wobei eine Anzahl und/oder ein Informationsgehalt der Bedieninformationen mit zunehmender Größe des Eingabeanteils der Anzeigefläche abnimmt. Dies bedeutet, dass in angespannteren Fahrsituationen, die eine erhöhte Aufmerksamkeit des Nutzers für den Straßenverkehr und/oder die sichere Bedienung einer Lenkung usw. beanspruchen, einerseits eine Vergrößerung des Eingabeanteils der Anzeigefläche bewirkt wird und andererseits die zur Verfügung stehenden Optionen verringert werden, um hierüber eine Treffsicherheit und/oder Auswahl für den Fahrer zu erleichtern.

Besonders bevorzugt wird eine Ausführungsform, bei der in einem Normalbedienmodus der Eingabeanteil der Anzeigefläche auf einen Flächenanteil von 20 % bis 80 %, bevorzugter von 40 % bis 60 % und am bevorzugtesten von 50 % festgelegt wird.

In einem so genannten Assistenzbedienmodus, in dem eine Vergrößerung des mit der Bedieninformation vorgesehenen Eingabeanteils der Anzeigefläche vorgesehen ist und bei dem eine Größe des Ausgabeanteils zugunsten des Eingabeanteils der Anzeigefläche gegenüber dem Normalbedienmodus reduziert ist, ist eine Ausgabe der dargestellten Ausgabeinformationen unverändert. Die zur Verfügung stehenden Statusinformationen bleiben hierbei alle erhalten, sind jedoch lediglich verkleinert dargestellt.

Bei einer bevorzugten Ausführungsform der Erfindung ist die Positionserfassungseinheit mit der Anzeigevorrichtung als Touchscreen ausgebildet. Hierbei ist eine Korrelation der Berührposition zu einer Darstellungsposition der Bedieninformationen für einen Nutzer besonders einfach nachzuvollziehen, so dass eine Bedienung besonders einfach möglich ist.

Die Merkmale des erfindungsgemäßen Verfahrens weisen dieselben Vorteile wie die entsprechenden Vorrichtungsmerkmale auf.

Nachfolgend wird die Erfindung anhand eines bevorzugten Ausführungsbeispiels näher erläutert. Hierbei zeigen:
- Fig. 1: eine schematische Darstellung eines Kraftfahrzeugs mit einem Multifunktionsanzeige- und Bediensystem;
- Fig. 2: eine Ansicht einer Anzeigefläche eines Multifunktionsanzeige- und Bediensystems in einem Anzeigekontext;
- Fig. 3: eine schematische Ansicht einer Anzeigefläche eines Multifunktionsanzeigeund Bediensystems in einem Normal-Bedienmodus; und
- Fig. 4: eine schematische Ansicht der Anzeigefläche eines Multifunktionsanzeigeund Bediensystems nach Fig. 2 und 3 im Assistenzbedienmodus.

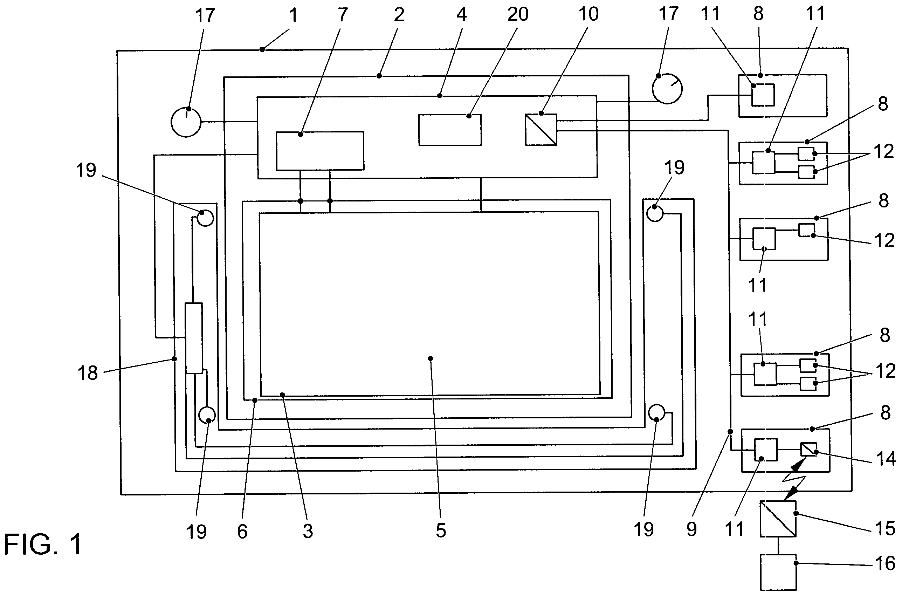

In Fig. 1 ist schematisch ein Kraftfahrzeug 1 dargestellt. Das Kraftfahrzeug 1 umfasst ein Multifunktionsanzeige- und Bediensystem 2. Dieses umfasst eine Anzeigevorrichtung 3, die mit einer Steuereinheit 4 gekoppelt ist. Die Steuereinheit 4 steuert die grafische Darstellung von Informationen auf einer Anzeigefläche 5 der Anzeigevorrichtung 3. Die Anzeigevorrichtung 3 ist als frei programmierbare Anzeigefläche ausgebildet. Dies bedeutet, dass an ein- und derselben Darstellungsposition zeitlich nacheinander unterschiedliche grafische Inhalte dargestellt werden können.

Mit der Anzeigevorrichtung 3 ist eine Positionserfassungseinheit 6 gekoppelt. Vorzugsweise ist die Positionserfassungseinheit 6 als berührungsempfindliche Positionsbestimmungseinheit ausgebildet. Besonders bevorzugt ist die Positionserfassungseinheit 6 mit der Anzeigevorrichtung 3 als Touchscreen-Vorrichtung ausgebildet. Die Positionserfassungseinheit 6 liefert die Koordinaten eines Berührpunktes der Anzeigefläche 5 durch ein Betätigungselement, insbesondere einen Finger, eines Nutzers. Über eine Logik 7 wird der Berührposition relativ zu den auf der Anzeigefläche 5 dargestellten Informationen Steuerbefehle für eine Bedienung von Funktionen und/oder Fahrzeugsystemen 8 erzeugt. Diese Fahrzeugsysteme 8 können über einen Fahrzeugdatenbus 9 oder direkt mit einer Schnittstelle 10 des Multifunktionsanzeige- und Bediensystems 2 gekoppelt sein. Die einzelnen Fahrzeugsysteme 8 umfassen in der Regel ein Steuergerät 11, über welches das Fahrzeugsystem mit dem Fahrzeugdatenbus 9 oder direkt mit der Schnittstelle 10 des Multifunktionsanzeige- und Bediensystems 2 verbunden ist. Die Steuergeräte 11 steuern die einzelnen Fahrzeugsysteme 8 und/oder stellen deren Funktionalität bereit. Unter anderem werten die Steuergeräte 11 beispielsweise Messwerte von Sensoren 12 aus, die fahrzeuginterne, fahrzeugexterne oder nutzerbezogene Zustandsinformationen erfassen können. Über solche Sensoren, welche beispielsweise Raddrehimpuls, Feuchtigkeitssensoren, Füllstandssensoren, Drucksensoren, Trägheitssensoren, Temperaturfühler, optische Sensoren, Ultraschallsensoren, Radarsensoren usw. sein können, können Zustandsinformationen über das Fahrzeug, einzelne Fahrzeugsysteme, den Nutzer und/oder eine Fahrzeugumgebung erfasst werden. Die Fahrzeugumgebung wird beispielsweise durch eine Verkehrsdichte, eine Temperatur, eine Bodenbeschaffenheit, eine Feuchtigkeit, eine Umgebungshelligkeit usw. gekennzeichnet. Das Fahrzeug als Ganzes und/oder einzelne Fahrzeugsysteme sind beispielsweise durch physikalische Messgrößen wie eine Temperatur, eine mechanische Stellung einzelner Aktoren, eine Aktivierung einzelner elektronischer Systeme, beispielsweise eines Antiblockiersystems, eines elektronischen Stabilitätsprogramms, ein Auslösen von anderen Sicherheitssystemen, beispielsweise eines Airbags usw. gekennzeichnet. Ein Zustand eines Nutzers und/oder mehrerer Nutzer kann beispielsweise über Kamerasensoren und/oder berührungsempfindliche Sensoren, die beispieisweise in ein Lenkrad und/oder einen Sitz eingearbeitet sind, erfasst werden. Beispielsweise kann eine Lidschlagfrequenz ausgewertet werden, um eine Müdigkeit eines Fahrers zu erfassen. Ebenso ist es möglich, eine Blickrichtung des Fahrers mittels eines Kamerasystems zu ermitteln, um hieraus eine Aufmerksamkeit des Fahrers abzuleiten. Andere Sensoren können beispielsweise eine Herzfrequenz, eine Atmungsfrequenz, eine Feuchtigkeit der Haut und/oder eine Leitfähigkeit der Haut usw. erfassen, um hieraus Informationen über den Nutzer abzuleiten. Mittels der Sensoren 12 erfasste Informationen und Informationen über durch die Steuergeräte angesteuerte Aktoren 13 und/oder über von externen Systemen 14 erfassten Informationen werden über die Steuergeräte 11 der Steuereinheit 4 übermittelt. Fahrzeugexterne Informationen können beispielsweise über eine Kommunikationsschnittstelle 14 eines der Fahrzeugsysteme 8' und eine fahrzeugexterne Kommunikationsschnittstelle 15 von einem fahrzeugexternen System 16 abgerufen werden. Eine solche Kommunikation wird vorzugsweise eine drahtlose Kommunikation, beispielsweise Funkkommunikation, sein. Diese kann beispielsweise über ein Mobilfunk-Telefonnetz abgewickelt werden. Es können jedoch auch andere, beispielsweise Fahrzeugzu-Fahrzeug-Kommunikationssysteme, verwendet werden. Auch andere Kommunikationssysteme, die einen Austausch von Informationen zwischen dem Kraftfahrzeug 1 und dem externen System 16 ermöglichen, können verwendet werden.

Zusätzlich zu diesen Zustandsinformationen übermitteln die Steuergeräte 11 der Fahrzeugsysteme 8 Informationen an das Multifunktionsanzeige- und Bediensystem 2, die zum einen zum Generieren von Steuerbefehlen, d.h. zum Bedienen der einzelnen Fahrzeugsysteme 8, notwendig sind, und/oder Informationen, die dem Nutzer über die Anzeigevorrichtung 4 auf der Anzeigefläche grafisch dargestellt werden und hierüber eine Funktionalität des Fahrzeugsystems bereitstellen. Beispielsweise stellen gemessene Luftdruckwerte einzelner Fahrzeugreifen, die in einem bestimmten Anzeigekontext dem Nutzer auf der Anzeigefläche 5 dargestellt werden, solche Informationen dar, die eine Funktionalität eines Fahrzeugsystems bereitstellen. Die darzustellenden Informationen, die die Funktionalitäten der einzelnen Fahrzeugsysteme bereitstellen, sind in der Regel in so genannte Anzeigekontexte gegliedert. Miteinander inhaltlich verknüpfte Informationen werden hierbei zusammengefasst zeitgleich auf der Anzeigefläche der Anzeigevorrichtung 4 dargestellt. Üblicherweise existieren einzelne Informationen, die einen Status einzelner Fahrzeugsysteme angeben, die kontextübergreifend für einen Nutzer von besonderem Interesse sind. Hierzu zählen beispielsweise eine Uhrzeit, eine Angabe über eine aktuell ausgegebene Medienquelle, insbesondere eine Audioquelle, und/oder Vorgabewerte für eine Fahrzeuginnenraumklimatisierung usw. Solche Informationen, die kontextübergreifend von besonderem Interesse sind, werden häufig als Statusinformationen bezeichnet. Parameter für eine Fahrzeuginnenraumklimatisierung können hierbei beispielsweise häufig unabhängig von dem aktuellen Anzeige- oder Bedienkontext über gesonderte Bedienelemente 18 eingestellt werden.

Für die Statusinformationen ist auf der Anzeigefläche 5 vorzugsweise ein so genannter Ausgabeanteil der Anzeigefläche reserviert. Unabhängig von dem aktuellen Anzeige- und Bedienkontext wird in diesem Ausgabeanteil der Anzeigefläche 5 eine grafische Darstellung von Statusinformationen vorgenommen. Ein übriger Anteil der Anzeigefläche 5 wird in einem so genannten Anzeigekontext, in dem lediglich Informationen an den Nutzer ausgegeben werden oder Funktionalitäten bereitgestellt werden, für andere Ausgabeinformationen verwendet. In einem solchen Anzeigemodus sind somit vorzugsweise keine Informationen dargestellt, die für eine konkrete Bedienung, insbesondere eine Bedienung über die Positionserfassungseinheit, vorgesehen sind. In einem anderen Modus, einem so genannten Bedienmodus, werden hingegen in einem Eingabeanteil der Anzeigefläche 5 so genannte Eingabeinformationen, d.h. Bedieninformationen und virtuelle Bedienelemente, grafisch dargestellt.

Mit der Steuereinheit 4 ist bei der bevorzugten dargestellten Ausführungsform nach Fig. 1 ein weiteres Positionserfassungssystem 18 gekoppelt. Dieses ist vorzugsweise als berührungslos messendes Annäherungssystem ausgebildet, welches eine Position eines Betätigungselements, insbesondere eines Körperteils, bevorzugt eines Fingers, relativ zu der Anzeigefläche dreidimensional im Raum bestimmen kann. Das weitere Positionserfassungssystem 18 umfasst in einer Ausführungsform beispielsweise mehrere um die Anzeigefläche 5 herum angeordnete Erfassungssensoren 19, die beispielsweise ein über einen Fahrzeugsitz (nicht dargestellt) eingekoppeltes Hochfrequenzsignal kapazitiv empfangen, welches über einen Körper des Nutzers übertragen wird. Über eine Triangulation der von den einzelnen Erfassungssensoren 19 empfangenen Signalstärken kann die Position des Betätigungselements relativ zu der Anzeigefläche 5 bestimmt werden. Werden über einen Fahrersitz und einen Beifahrersitz unterschiedliche hochfrequente Signale in den jeweils auf dem Fahrersitz bzw. Beifahrersitz sitzenden Nutzer eingekoppelt, so ist anhand des empfangenen Signals zusätzlich eine Nutzererkennung möglich. Die grundlegenden Prinzipien einer solchen HF-Signalübertragung über den Körper eines Nutzers in einem Kraftfahrzeug zur berührungsiosen Detektion einer Annäherung eines Körperteils sind in der WO 2004/078536 beschrieben.

Dem Fachmann sind weitere Erfassungssysteme 18 bekannt, die berührungslos eine Position eines Betätigungselements relativ zu der Anzeigefläche 5 bestimmen können. Es können beispielsweise auch Sensoren, die eine kapazitive Änderung in einem Bereich vor einem Bildschirm erfassen, verwendet werden. Solche "Sensoren" können beispielsweise durch durchsichtige Leiterbahnen, die vorzugsweise gekreuzt vor einer als Touchscreen ausgebildeten Anzeigevorrichtung angeordnet sind, gebildet sein. Eine solche Anordnung umfasst eine Vielzahl von "Sensoren", die Sensorsignale liefern. Andere berührungslos messende Sensoren arbeiten ultraschallbasiert oder verwenden optische Verfahren. Solche nach einem optischen Verfahren arbeitende Sensoren können beispielsweise jeweils gemäß folgendem Prinzip ausgestaltet sein: Eine Sende-LED strahlt ein rechteckförmig amplitudenmoduliertes Lichtsignal im optischen oder infraroten Wellenlängenbereich ab. Das an einem Objekt reflektierte Lichtsignal wird von einer Photodiode erfasst. Von einer Kompensations-LED wird ein um 180° phasenversetztes ebenfalls rechteckförmig amplitudenmoduliertes Referenzlichtsignal zu der Photodiode über einen unveränderlichen Lichtweg gesandt. Die Kompensations-LED wird über einen Regelkreis mittels eines Regelsignals so ausgeregelt, dass sich das empfangene reflektierte Lichtsignal der Sende-LED und das empfangene Referenzlichtsignal der Kompensations-LED an der Photodiode aufheben und ein Gleichsignal detektiert wird. Eine Änderung des Regelsignals ist ein Maß für den Abstand des Objekts. Eine nach diesem Prinzip ausgestaltete Sensoreinheit ist weitgehend unabhängig von Temperatur- und Helligkeitsschwankungen.

Eine Umschaltung zwischen dem Anzeigemodus und einem Bedienmodus erfolgt vorzugsweise immer dann, wenn eine Annäherung eines Betätigungselements, insbesondere eines Fingers, des Nutzers an die Anzeigefläche 5 registriert wird. Die von den einzelnen Fahrzeugsystemen 8 bereitgestellten Zustandsinformationen werden dann von einer Kontextauswertungseinheit 20 ausgewertet. Zusätzlich können auch in dem Multifunktionsanzeige- und Bediensystem 2 ermittelte Informationen, beispielsweise über eine Treffsicherheit des Nutzers von einzelnen virtuellen Bedienelementen, eine Bedienhistorie usw., mit ausgewertet werden. Anhand der Zustandsinformationen ermittelt die Kontextauswertungseinheit 20, wie groß ein Anteil der Anzeigefläche sein soll, der für Eingabeinformationen, d.h. Bedieninformationen und virtuelle Bedienelemente, zur Verfügung stehen soll. Dieser Anteil wird als Eingabeanteil 21 der Anzeigefläche 5 bezeichnet. Ebenfalls wird eine Größe des Ausgabeanteils 22 der Anzeigefläche 5 festgelegt, indem Ausgabeinformationen, beispielsweise die Statusinformationen, auch während eines Bedienmodus angezeigt werden. Ist eine Beanspruchung durch den Verkehr gering, eine Fahrzeuggeschwindigkeit mäßig und ein Aufmerksamkeitszustand des Fahrers als normal ermittelt worden, wird beispielsweise in einen Normalbedienmodus gewechselt. In diesem ist ein vorgegebener Anteil der Anzeigefläche 5, beispielsweise 30 % bis 80 %, vorzugsweise 40 % bis 60 % und am bevorzugtesten 50 % der Anzeigefläche als Eingabeanteil vorgesehen. Entsprechend ist der komplementäre Anteil der Anzeigefläche für den Ausgabeanteil vorgesehen.

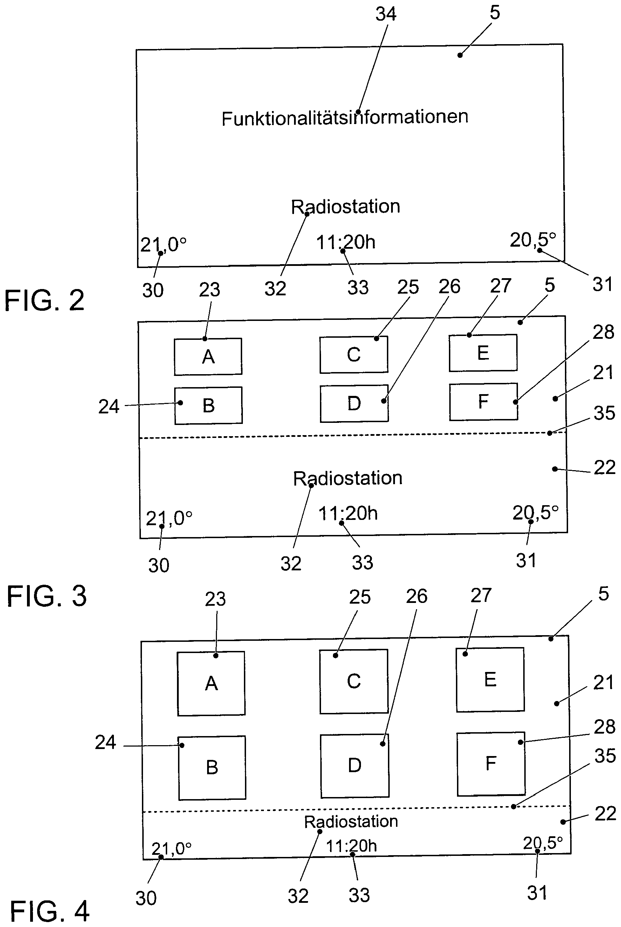

In Fig. 2 ist die Ansicht der Anzeigefläche 5 in einem Anzeigemodus dargestellt. In einem unteren Teil werden Statusinformationen angezeigt, die die Temperaturangaben 30, 31 für eine fahrzeugseitenbezogene Innenraumklimatisierung, eine Medienquellenangabe 32 und eine Uhrzeitangabe 33 umfassen. Diese Statusinformationen werden in einem Anzeigekontext, in dem nur Informationen an den Nutzer ausgegeben werden und keine direkt mit einer Bedienung in Zusammenhang stehenden Bedieninformationen und/oder virtuelle Bedienelemente angezeigt werden, dargestellt. In einem oberen Teil werden Funktionalitätsinformationen 34 angezeigt, über die ein Fahrzeugsystem seine Funktionalität bereitstellt. Beispielsweise können die Informationen eine Navigationskarte sein.

In Fig. 3 ist die Ansicht der Anzeigefläche im Normal-Bedienmodus dargestellt. In dem Eingabeanteil 21 sind als Eingabeinformationen sechs virtuelle Bedienelemente 23-28 dargestellt. In dem Ausgabeanteil 22 sind Temperaturangaben 30, 31 für eine fahrzeugseitenbezogene Innenraumklimatisierung, eine Medienquellenangabe 32, hier eine Radiostation, und eine Uhrzeitangabe 33 grafisch dargestellt. Der Eingabeanteil 21 und der Ausgabeanteil 22 sind in der Darstellung durch eine gestrichelte Linie 35 getrennt, die hier nur zu Zwecken der Veranschaulichung eingezeichnet ist.

Stellt die Kontextauswertungseinheit 20 des Multifunktionsanzeige- und Bediensystems 2 nach Fig. 1 anhand der Zustandsinformationen der verschiedenen Fahrzeugsysteme 8 fest, dass beispielsweise ein Stressniveau des Fahrers hoch ist, beispielsweise das Kraftfahrzeug 1 mit einer hohen Geschwindigkeit bewegt wird, eine hohe Verkehrsdichte vorliegt und der Fahrer eine Landstraße befährt, was beispielsweise aus den Daten eines Fahrzeugnavigationssystems abgeleitet ist, so wird der Eingabeanteil der Bildschirmfläche bei einer Annäherung des Betätigungselementes an die Anzeigefläche 5 größer festgelegt, beispielsweise zu 80 %. Dieses ist in Fig. 4 beispielhaft dargestellt. Die virtuellen Bedienelemente 23-28 sind vergrößert in dem Eingabeanteil 21 der Anzeigefläche 5 dargestellt. Hierdurch ist es für den Nutzer leichter, diese durch eine Berührhandlung zu betätigen. Entsprechend ist der Ausgabeanteil 22 der Anzeigefläche 5 verringert. Dieser Bedienmodus wird als Assistenzbedienmodus bezeichnet, da durch eine Vergrößerung des Eingabeanteils 21 der Anzeigefläche 5 eine Eingabe durch den Nutzer unterstützt wird. Die in dem Ausgabeanteil 22 enthaltenen Informationen, die Temperaturangaben 30, 31, die Medienquellenangabe 32 und die Uhrzeitangabe 33 umfassen denselben Informationsgehalt wie im Normalbedienmodus, wie er in Fig. 3 dargestellt ist. Bei anderen Ausführungsformen kann vorgesehen sein, dass der Informationsgehalt des Eingabeanteils 21 in dem Assistenzmodus eingeschränkt wird. Ebenso können die Informationen in dem Ausgabeanteil 22 eingeschränkt werden. Bei einer Ausführungsform wird der Eingabeanteil bis auf 100 % der Anzeigefläche heraufgesetzt. Ebenso kann beispielsweise die Anzahl oder Menge der Bedieninformationen und/oder Bedienelemente, die in dem Eingabeanteil 21 der Anzeigefläche 5 dargestellt werden, reduziert werden. Beispielsweise kann die Anzahl der Bedienoptionen verringert werden, wobei beispielsweise nur die am wahrscheinlichsten betätigten Bedienoptionen zur Auswahl angezeigt werden.

Es versteht sich für den Fachmann, dass die dargestellten Ausführungsbeispiele lediglich beispielhaft zu verstehen sind und eine Vielzahl unterschiedlicher Variationsmöglichkeiten besteht. Insbesondere kann neben dem Normalbedienmodus und dem Assistenzbedienmodus eine Vielzahl von Untermodi festgelegt werden, in denen die Aufteilung der Anzeigefläche in den Eingabeanteil 21 und den Ausgabeanteil 22 unterschiedlich variiert ist.

Ein Auslösen einer Funktion, die mit einem der virtuellen Bedienelemente 23-28 verknüpft ist, erfolgt über ein Erzeugen eines Steuerbefehls, wenn eine Berührposition, die mittels der Positionserfassungseinheit 6 erfasst ist, im Bereich der grafischen Darstellung eines entsprechenden virtuellen Bedienelements auf der Anzeigefläche 5 liegt. Die Logik 7 korreliert somit die erfasste Berührposition mit der Darstellungsposition und leitet hieraus einen entsprechenden Steuerbefehl für eines der zu bedienenden Fahrzeugsysteme 8 ab. Die Logik 7 kann über programmierbare Logikbausteine ausgeführt sein. Ebenso kann es eine programmgesteuerte Software in Zusammenarbeit mit einer Recheneinheit ausgeführte Logik sein.

### Bezugszeichenliste

- 1: Kraftfahrzeug
- 2: Multifunktionsanzeige- und Bediensystem
- 3: Anzeigevorrichtung
- 4: Steuereinheit
- 5: Anzeigefläche
- 6: Positionserfassungseinheit
- 7: Logik
- 8: Fahrzeugsystem
- 9: Fahrzeugdatenbus
- 10: Schnittstelle
- 11: Steuergeräte
- 12: Sensoren
- 13: Aktoren
- 14: Kommunikationsschnittstelle
- 15: externe Kommunikationsschnittstelle
- 16: externes System
- 17: gesonderte Bedienelemente
- 18: weiteres Positionserfassungssystem
- 19: Erfassungssensoren
- 20: Kontextauswertungseinheit
- 21: Eingabeanteil
- 22: Ausgabeanteil
- 23-28: virtuelle Bedienelemente
- 30,31: Temperaturangabe
- 32: Medienquellenangabe
- 33: Uhrzeitangabe
- 34: Funktionalitätsinformation
- 35: gestrichelte Linie

## Patentansprüche

1. Multifunktionsanzeige- und Bediensystem (2) zum Vermitteln von Informationen und Erfassen von Betätigungshandlungen für eine Steuerung von Funktionen und/oder Fahrzeugsystemen eines Kraftfahrzeugs (1) umfassend
eine Anzeigevorrichtung (3), eine mit der Anzeigevorrichtung (3) gekoppelte Steuereinheit (4) zum Steuern einer Anzeige von Informationen auf einer Anzeigefläche (5) der Anzeigevorrichtung (3), eine mit der Anzeigevorrichtung (3) und der Steuereinheit (4) gekoppelte Positionserfassungseinheit (6) zum Erfassen einer Position eines Betätigungselements relativ zu der Anzeigefläche (5),
wobei die Steuereinheit (4) eine Logik (7) umfasst, die in Abhängigkeit von der erfassten Position des Betätigungselements relativ zu den auf der Anzeigefläche (5) dargestellten Informationen Steuerbefehle für eine Bedienung der Funktionen und/oder Fahrzeugsysteme erzeugt,
**dadurch gekennzeichnet, dass**
die Steuereinheit (4) die Anzeigefläche in ein als Ausgebeanteil (22) bezeichnetes zusammenhängendes Gebiet und einen als Eingabeanteil (21) bezeichnetes zusammenhängendes Gebiet unterteilt, wobei entweder eine Gebietsgrenze die Anzeigefläche horizontal oder vertikal teilt oder alternativ der Eingabeanteil ein zentrales Gebiet ist, wobei die Steuereinheit (4) ferner eine Kontextauswertungseinheit (20) umfasst, die Zustandsinformationen erfasst und auswertet und entsprechend der Auswertung in einem Bedienmodus eine Größe des Eingabeanteil (21) der Anzeigefläche (5) für ein Anzeigen von Bedieninformationen und eine Größe des Ausgabeanteil (22) der Anzeigefläche (5) für ein Ausgeben von Ausgabeinformationen festlegt, wobei die Logik (7) ausgebildet ist, dass nur mit Bedieninformationen korrelierte erfasste Positionen des Betätigungselements für ein Erzeugen der Steuerbefehle genutzt werden und in dem Bedienmodus in dem Eingabeanteil (21) der Anzeigefläche (5) ausschließlich Bedieninformationen und Bedienelemente angezeigt sind und in dem Ausgabeanteil (22) ausschließlich Statusinformationen und/oder Funktionsausgaben einer Funktion oder eines Fahrzeugsystems (8) dargestellt sind, die über das Multifunktionsanzeige- und Bediensystem (2) ihre Funktionalität bereitstellen oder zu steuern sind.

2. Multifunktionsanzeige- und Bediensystem (2) nach einem der Ansprüche, **dadurch gekennzeichnet, dass** eine Schnittstelle mit der Steuereinheit (4) gekoppelt ist, über die als Zustandsinformationen Daten von Fahrzeugsystemen (8) erfasst werden, die Umgebungszustände, beispielsweise Witterungsbedingungen, Straßenbedingungen, eine Verkehrsdichte, Licht- und/oder Sichtverhältnisse, oder die fahrzeuginterne Zustände, beispielsweise eine Geschwindigkeit, einen Lenkwinkel, eine Aktivierung einzelner Fahrzeugsysteme, beispielsweise eines ABS, ESP-Systems, einer Fahrzeugbeleuchtung, und/oder Benutzerzustände, beispielsweise eine Lidschlagtätigkeit, eine Herzfrequenz, eine Atemfrequenz, eine Hautleitfähigkeit, eine Identifizierung des Nutzers umfassen.

3. Multifunktionsanzeige- und Bediensystem (2) nach einem der genannten Ansprüche, **dadurch gekennzeichnet, dass** mit der Steuereinheit (4) eine Annäherungssensorik zum Erfassen einer Annäherung des Betätigungselements an die Anzeigefläche (5) gekoppelt ist, und die Steuereinheit (4) ausgebildet ist, bei einer erfassten Annäherung des Betätigungselements an die Anzeigefläche (5) den Bedienmodus zu aktivieren.

4. Multifunktionsanzeige- und Bediensystem (2) nach einem der genannten Ansprüche, **dadurch gekennzeichnet, dass** die Kontextauswertungseinheit (20) ausgebildet ist, eine mehrdimensionale Verknüpfung der Zustandsinformationen auszuwerten, um die Größe des Eingabeanteils (21) und des Ausgabeanteils (22) festzulegen.

5. Multifunktionsanzeige- und Bediensystem (2) nach einem der genannten Ansprüche, **dadurch gekennzeichnet, dass** eine Auswahl der in dem Eingabeanteil (21) dargestellten Bedieninformationen unabhängig von der Größe des Eingabeanteils (21) der Anzeigefläche (5) ist, jedoch deren Darstellungsgrößen abhängig von der Größe des Eingabeanteils (21) sind.

6. Multifunktionsanzeige- und Bediensystem (2) nach einem der Ansprüche 1 bis 4, **dadurch gekennzeichnet, dass** eine Auswahl der in dem Eingabeanteil (21) dargestellten Bedieninformationen abhängig von einer Größe des Eingabeanteils (21) ist, wobei eine Anzahl und/oder ein Informationsgehalt der Bedieninformationen mit zunehmender Größe des Eingabeanteils (21) der Anzeigefläche (5) abnimmt.

7. Multifunktionsanzeige- und Bediensystem (2) nach einem der genannten Ansprüche, **dadurch gekennzeichnet, dass** in einem Normal-Bedienmodus der Eingabeanteil (21) der Anzeigefläche (5) auf einen Flächenanteil von 20 % bis 80 %, bevorzugter von 40 % bis 60 % und am bevorzugtesten von 50 % festgelegt ist und in einem AssistenzBedienmodus, in dem eine Größe des Ausgabeanteils (22) zugunsten des Eingabeanteils (21) der Anzeigefläche (5) gegenüber dem Normal-Bedienmodus reduziert ist, eine Auswahl der dargestellten Ausgabeinformationen unverändert bleibt.

8. Multifunktionsanzeige- und Bediensystem (2) nach einem der genannten Ansprüche, **dadurch gekennzeichnet, dass** die Anzeigevorrichtung (3) und die Positionserfassungseinheit gemeinsam als Touchscreen ausgebildet sind.

9. Verfahren zum Bedienen von Funktionen und/oder Fahrzeugsystemen eines Kraftfahrzeugs (1) mittels eines Multifunktionsanzeige- und Bediensystems (2), wobei das Multifunktionsanzeige- und Bediensystem (2) eine Anzeigevorrichtung (3) zum Vermitteln von Informationen und eine mit der Anzeigevorrichtung (3) gekoppelte Positionserfassungseinheit (6) zum Erfassen einer Position eines Betätigungselements relativ zu einer Anzeigefläche (5) der Anzeigevorrichtung (3) umfasst, umfassend die Schritte:
Anzeigen von Informationen auf der Anzeigefläche (5), und
Erfassen von Betätigungshandlungen eines Nutzers mittels des Erfassens einer Position des Betätigungselements des Nutzers; und
Erzeugen von Steuerbefehlen für eine Bedienung der Funktionen und/oder Fahrzeugsysteme (8) in Abhängigkeit von der erfassten Position des Betätigungselements relativ zu den auf der Anzeigefläche (5) dargestellten Informationen,
**dadurch gekennzeichnet, dass**
die Anzeigefläche in ein als Ausgebeanteil (22) bezeichnetes zusammenhängendes Gebiet und einen als Eingabeanteil (21) bezeichnetes zusammenhängendes Gebiet unterteilt wird, wobei entweder eine Gebietsgrenze die Anzeigefläche horizontal oder vertikal teilt oder alternativ der Eingabeanteil ein zentrales Gebiet ist,
Zustandsinformationen erfasst und ausgewertet werden und entsprechend der Auswertung in einem Bedienmodus eine Größe eines Eingabeanteils (21) der Anzeigefläche (5) für ein Anzeigen von Eingabeinformationen und eine Größe eines Ausgabeanteils (22) der Anzeigefläche (5) für ein Ausgeben von Ausgabeinformationen festlegt wird und in dem Bedienmodus in dem Eingabeanteil (21) der Anzeigefläche (5) ausschließlich Bedieninformationen und Bedienelemente angezeigt werden und in dem Ausgabeanteil (22) ausschließlich Statusinformationen und/oder Funktionsausgaben einer Funktion oder eines Fahrzeugsystems (8) dargestellt werden, die über das Multifunktionsanzeige- und Bediensystem (2) ihre Funktionalität bereitstellen und/oder zu steuern sind.

10. Verfahren nach Anspruch 9, **dadurch gekennzeichnet, dass** als Zustandsinformationen Daten von Fahrzeugsystemen (8) erfasst werden, die Umgebungszustände, beispielsweise Witterungsbedingungen, Straßenbedingungen, eine Verkehrsdichte, Licht- und/oder Sichtverhältnisse, die fahrzeuginterne Zustände, beispielsweise eine Geschwindigkeit, einen Lenkwinkel, eine Aktivierung einzelner Fahrzeugsysteme, beispielsweise eines ABS, ESP-Systems, einer Fahrzeugbeleuchtung, und/oder Benutzerzustände, beispielsweise eine Lidschlagtätigkeit, eine Herzfrequenz, eine Atemfrequenz, eine Hautleitfähigkeit, eine Identifizierung des Nutzers, umfassen und/oder anzeige- und bediensysteminterne Zustandsdaten, beispielsweise einen Anzeige- und/oder Bedienkontext, eine Bedienhistorie erfasst und auswertet werden.

11. Verfahren nach einem der Ansprüche 9 oder 10, **dadurch gekennzeichnet, dass** mittels einer Annäherungssensorik eine Annäherung des Betätigungselements an die Anzeigefläche (5) erfasst wird und bei einer erfassten Annäherung des Betätigungselements an die Anzeigefläche (5) der Bedienmodus aktiviert wird.

12. Verfahren nach einem der Ansprüche 9 bis 11, **dadurch gekennzeichnet, dass** die in dem Eingabeanteil (21) dargestellten Eingabeinformationen unabhängig von der Größe des Eingabeanteils (21) der Anzeigefläche (5) ausgewählt werden, jedoch deren Darstellungsgrößen abhängig von der Größe des Eingabeanteils (21) festgelegt wird.

13. Verfahren nach einem der Ansprüche 9 bis 12, **dadurch gekennzeichnet, dass** die in dem Eingabeanteil (21) dargestellten Eingabeinformationen abhängig von einer Größe des Eingabeanteils (21) ausgewählt werden, wobei eine Anzahl und/oder ein Informationsgehalt der Bedieninformationen mit zunehmender Größe des Eingabeanteils (21) der Anzeigefläche (5) verringert werden.

## Claims

1. Multifunction display and operator control system (2) for conveying information and sensing operating actions for controlling functions and/or vehicle systems of a motor vehicle (1), comprising
a display apparatus (3), a control unit (4), coupled to the display apparatus (3), for controlling a display of information on a display panel (5) of the display apparatus (3), a position sensing unit (6), coupled to the display apparatus (3) and the control unit (4), for sensing a position of an operating element relative to the display panel (5),
wherein the control unit (4) comprises logic (7) that takes the sensed position of the operating element relative to the information depicted on the display panel (5) as a basis for generating control commands for operator control of the functions and/or vehicle systems, **characterized in that**
the control unit (4) divides the display panel into a coherent area referred to as the output component (22) and a coherent area referred to as the input component (21), wherein either an area boundary divides the display panel horizontally or vertically or alternatively the input component is a central area, wherein the control unit (4) further comprises a context evaluation unit (20) that captures and evaluates state information and, in accordance with the evaluation, in an operator control mode, stipulates a size of the input component (21) of the display panel (5) for displaying operator control information and a size of the output component (22) of the display panel (5) for outputting output information, wherein the logic (7) is configured so that only sensed positions of the operating element that are correlated with operator control information are used for generating the control commands and, in the operator control mode, exclusively operator control information and operator control elements are displayed in the input component (21) of the display panel (5) and exclusively status information and/or function outputs from a function or from a vehicle system (8) that provide their functionality or can be controlled via the multifunction display and operator control system (2) are depicted in the output component (22).

2. Multifunction display and operator control system (2) according to one of the claims, **characterized in that** an interface is coupled to the control unit (4) and is used to capture data from vehicle systems (8) as state information, said data comprising ambient states, for example weather conditions, road conditions, a traffic density, light and/or visibility conditions, or comprising vehicle-internal states, for example a speed, a steering angle, an activation of individual vehicle systems, for example of an ABS or ESP system, of a vehicle lighting system, and/or user states, for example a blink activity, a heart rate, a respiratory rate, a skin conductivity, and an identification of the user.

3. Multifunction display and operator control system (2) according to one of the cited claims, **characterized in that** the control unit (4) has a proximity sensor system coupled to it for sensing an approach by the operating element towards the display panel (5), and the control unit (4) is configured to activate the operator control mode when an approach by the operating element towards the display panel (5) is sensed.

4. Multifunction display and operator control system (2) according to one of the cited claims, **characterized in that** the context evaluation unit (20) is configured to evaluate a multidimensional combination of the state information in order to stipulate the size of the input component (21) and of the output component (22).

5. Multifunction display and operator control system (2) according to one of the cited claims, **characterized in that** a selection of the operator control information depicted in the input component (21) is independent of the size of the input component (21) of the display panel (5), but the depiction sizes thereof are dependent on the size of the input component (21).

6. Multifunction display and operator control system (2) according to one of Claims 1 to 4, **characterized in that** a selection of the operator control information depicted in the input component (21) is dependent on a size of the input component (21), wherein a number and/or an information content of the operator control information decreases as the size of the input component (21) of the display panel (5) increases.

7. Multifunction display and operator control system (2) according to one of the cited claims, **characterized in that** in a normal operator control mode the input component (21) of the display panel (5) is stipulated as having a surface area component of 20% to 80%, more preferably of 40% to 60% and most preferably of 50%, and in an assistance operator control mode, in which a size of the output component (22) is reduced in favour of the input component (21) of the display panel (5) as compared with the normal operator control mode, a selection of the depicted output information remains unaltered.

8. Multifunction display and operator control system (2) according to one of the cited claims, **characterized in that** the display apparatus (3) and the position sensing unit are jointly configured as a touchscreen.

9. Method for the operator control of functions and/or vehicle systems of a motor vehicle (1) by means of a multifunction display and operator control system (2), wherein the multifunction display and operator control system (2) comprises a display apparatus (3) for conveying information and a position sensing unit (6), coupled to the display apparatus (3), for sensing a position of an operating element relative to a display panel (5) of the display apparatus (3), comprising the steps of:
displaying information on the display panel (5), and sensing operating actions of a user by means of the sensing of a position of the operating element of the user; and
generating control commands for operator control of the functions and/or vehicle systems (8) on the basis of the sensed position of the operating element relative to the information depicted on the display panel (5),
**characterized in that**
the display panel is divided into a coherent area referred to as the output component (22) and a coherent area referred to as the input component (21), wherein either an area boundary divides the display panel horizontally or vertically or alternatively the input component is a central area,
state information is captured and evaluated and, in accordance with the evaluation, in an operator control mode, a size of an input component (21) of the display panel (5) for displaying input information and a size of an output component (22) of the display panel (5) for outputting output information are stipulated and, in the operator control mode, exclusively operator control information and operator control elements are displayed in the input component (21) of the display panel (5) and exclusively status information and/or function outputs from a function or from a vehicle system (8) that provide their functionality and/or can be controlled via the multifunction display and operator control system (2) are depicted in the output component (22).

10. Method according to Claim 9, **characterized in that** the state information captured is data from vehicle systems (8), said data comprising ambient states, for example weather conditions, road conditions, a traffic density, light and/or visibility conditions, comprising vehicle-internal states, for example a speed, a steering angle, an activation of individual vehicle systems, for example of an ABS or ESP system, of a vehicle lighting system, and/or user states, for example a blink activity, a heart rate, a respiratory rate, a skin conductivity, an identification of the user, and/or display- and operator-control-system-internal state data, for example a display and/or operator control context, or an operator control history, are captured and evaluated.

11. Method according to either of Claims 9 and 10, **characterized in that** a proximity sensor system is used to sense an approach by the operating element towards the display panel (5), and the operator control mode is activated when an approach by the operating element towards the display panel (5) is sensed.

12. Method according to one of Claims 9 to 11, **characterized in that** the input information depicted in the input component (21) is selected independently of the size of the input component (21) of the display panel (5), but the depiction sizes thereof are stipulated depending on the size of the input component (21).

13. Method according to one of Claims 9 to 12, **characterized in that** the input information depicted in the input component (21) is selected depending on a size of the input component (21), wherein a number and/or an information content of the operator control information are decreased as a size of the input component (21) of the display panel (5) increases.

## Revendications

1. Système d'affichage et de commande multifonctions (2) pour communiquer des informations et détecter des opérations d'actionnement pour une commande de fonctions et/ou de systèmes de véhicule d'un véhicule automobile (1), comprenant
un dispositif d'affichage (3), une unité de commande (4) accouplée au dispositif d'affichage (3) pour commander un affichage d'informations sur une surface d'affichage (5) du dispositif d'affichage (3), une unité de détection de position (6) accouplée au dispositif d'affichage (3) et à l'unité de commande (4) pour détecter une position d'un élément d'actionnement par rapport à la surface d'affichage (5),
l'unité de commande (4) comprenant une logique (7) qui, en fonction de la position détectée de l'élément d'actionnement par rapport aux informations représentées sur la surface d'affichage (5), génère des ordres de commande pour une commande des fonctions et/ou des systèmes de véhicule,
**caractérisé en ce que**
l'unité de commande (4) divise la surface d'affichage en une zone continue appelée partie de sortie (22) et une zone continue appelée partie d'entrée (21), soit une limite des zones divisant la surface d'affichage horizontalement ou verticalement soit, en variante, la partie d'entrée étant une zone centrale, l'unité de commande (4) comprenant en outre une unité d'analyse de contexte (20) qui détecte et analyse les informations d'état et qui, en fonction de l'analyse, dans un mode de commande, fixe une grandeur de la partie d'entrée (21) de la surface d'affichage (5) pour un affichage d'informations de commande et une grandeur de la partie de sortie (22) de la surface d'affichage (5) pour une sortie d'informations de sortie, la logique (7) étant réalisée de telle sorte que seules des positions détectées de l'élément d'actionnement corrélées avec des informations de commande soient utilisées pour générer les ordres de commande et, en mode de commande, qu'exclusivement des informations de commande et des éléments de commande soient affichés dans la partie d'entrée (21) de la surface d'affichage (5) et qu'exclusivement des informations de statut et/ou des sorties de fonctions d'une fonction ou d'un système de véhicule (8) soient représentées dans la partie de sortie (22), lesquelles mettent en oeuvre leurs fonctions ou doivent être commandées par le biais du système d'affichage et de commande multifonctions (2).

2. Système d'affichage et de commande multifonctions (2) selon l'une des revendications, **caractérisé en ce qu'**une interface est accouplée à l'unité de commande (4), par le biais de laquelle des données de systèmes de véhicule (8) sont détectées en tant qu'informations d'état, lesquelles comprennent des états de l'environnement, par exemple des conditions météorologiques, l'état de la route, une densité de la circulation, des conditions d'éclairage et/ou de visibilité, ou les états internes du véhicule, par exemple une vitesse, un angle de braquage, une activation d'un système de véhicule individuel, par exemple d'un système ABS, ESP, d'un éclairage du véhicule et/ou des états de l'utilisateur, par exemple un clignement des yeux, une fréquence cardiaque, une fréquence respiratoire, une conductibilité de la peau, une identification de l'utilisateur.

3. Système d'affichage et de commande multifonctions (2) selon l'une quelconque des revendications précédentes, **caractérisé en ce qu'**un système de capteur de proximité est accouplé à l'unité de commande (4) pour détecter un rapprochement de l'élément d'actionnement de la surface d'affichage (5) et l'unité de commande (4) est réalisée pour activer le mode de commande dans le cas de la détection d'un rapprochement de l'élément d'actionnement de la surface d'affichage (5).

4. Système d'affichage et de commande multifonctions (2) selon l'une quelconque des revendications précédentes, **caractérisé en ce que** l'unité d'analyse de contexte (20) est réalisée pour analyser une liaison multidimensionnelle des informations d'état afin d'établir la grandeur de la partie d'entrée (21) et de la partie de sortie (22).

5. Système d'affichage et de commande multifonctions (2) selon l'une quelconque des revendications précédentes, **caractérisé en ce qu'**une sélection des informations de commande représentées dans la partie d'entrée (21) est indépendante de la grandeur de la partie d'entrée (21) de la surface d'affichage (5), mais ses grandeurs représentatives dépendent de la grandeur de la partie d'entrée (21).

6. Système d'affichage et de commande multifonctions (2) selon l'une quelconque des revendications 1 à 4, **caractérisé en ce qu'**une sélection des informations de commande représentées dans la partie d'entrée (21) dépend d'une grandeur de la partie d'entrée (21), un nombre et/ou une valeur informative des informations de commande diminue avec l'augmentation de la grandeur de la partie d'entrée (21) de la surface d'affichage (5).

7. Système d'affichage et de commande multifonctions (2) selon l'une quelconque des revendications précédentes, **caractérisé en ce que** dans un mode de commande normal, la partie d'entrée (21) de la surface d'affichage (5) est fixée à une partie de surface de 20 % à 80 %, de préférence de 40 % à 60 %, et le plus préférablement de 50 %, et dans un mode de commande d'assistance, dans lequel une grandeur de la partie de sortie (22) est réduite en faveur de la partie d'entrée (21) de la surface d'affichage (5) par rapport au mode de commande normal, une sélection des informations de sortie représentées reste inchangée.

8. Système d'affichage et de commande multifonctions (2) selon l'une quelconque des revendications précédentes, **caractérisé en ce que** le dispositif d'affichage (3) et l'unité de détection de position sont réalisés en commun sous forme d'écran tactile.

9. Procédé de commande de fonctions et/ou de systèmes de véhicule d'un véhicule automobile (1) au moyen d'un système d'affichage et de commande multifonctions (2), le système d'affichage et de commande multifonctions (2) comprenant un dispositif d'affichage (3) pour communiquer des informations et une unité de détection de position (6) accouplée au dispositif d'affichage (3) pour détecter une position d'un élément d'actionnement par rapport à une surface d'affichage (5) du dispositif d'affichage (3), le procédé comprenant les étapes suivantes :
affichage d'informations sur la surface d'affichage (5), et
détection d'opérations d'actionnement d'un utilisateur au moyen de la détection d'une position de l'élément d'actionnement de l'utilisateur ; et
génération d'ordres de commande pour une commande des fonctions et/ou des systèmes de véhicule (8) en fonction de la position détectée de l'élément d'actionnement par rapport aux informations représentées sur la surface d'affichage (5),
**caractérisé en ce que**
la surface d'affichage soit divisée en une zone continue appelée partie de sortie (22) et une zone continue appelée partie d'entrée (21), soit une limite des zones divisant la surface d'affichage horizontalement ou verticalement soit, en variante, la partie d'entrée étant une zone centrale,
des informations d'état étant détectées et analysées, et, en fonction de l'analyse, dans un mode de commande, une grandeur d'une partie d'entrée (21) de la surface d'affichage (5) pour un affichage d'informations d'entrée et une grandeur d'une partie de sortie (22) de la surface d'affichage (5) pour une sortie d'informations de sortie étant fixées, et, dans le mode de commande, seules des informations de commande et des éléments de commande étant affichés dans la partie d'entrée (21) de la surface d'affichage (5), et, dans la partie de sortie (22), seules des informations de statut et/ou des sorties de fonction d'une fonction ou d'un système de véhicule (8) étant représentées, lesquelles mettent en oeuvre leurs fonctions ou doivent être commandées par le biais du système d'affichage et de commande multifonctions (2).

10. Procédé selon la revendication 9, **caractérisé en ce que** des données de systèmes de véhicule (8) sont détectées en tant qu'informations d'état, lesquelles comprennent des états de l'environnement, par exemple des conditions météorologiques, l'état de la route, une densité de la circulation, des conditions d'éclairage et/ou de visibilité, les états internes du véhicule, par exemple une vitesse, un angle de braquage, une activation de systèmes de véhicule individuels, par exemple d'un système ABS, ESP, d'un éclairage du véhicule et/ou des états de l'utilisateur, par exemple un clignement des yeux, une fréquence cardiaque, une fréquence respiratoire, une conductibilité de la peau, une identification de l'utilisateur, et/ou des données d'état internes au système d'affichage et de commande, par exemple un contexte d'affichage et/ou de commande, un historique de commande, sont détectées et analysées.

11. Procédé selon l'une quelconque des revendications 9 ou 10, **caractérisé en ce qu'**au moyen d'un système de capteur de proximité, un rapprochement de l'élément d'actionnement de la surface d'affichage (5) est détecté, et en cas de détection d'un rapprochement de l'élément d'actionnement de la surface d'affichage (5), le mode de commande est activé.

12. Procédé selon l'une quelconque des revendications 9 à 11, **caractérisé en ce que** les informations d'entrée représentées dans la partie d'entrée (21) sont sélectionnées indépendamment de la grandeur de la partie d'entrée (21) de la surface d'affichage (5), mais ses grandeurs représentatives sont fixées en fonction de la grandeur de la partie d'entrée (21).

13. Procédé selon l'une quelconque des revendications 9 à 12, **caractérisé en ce que** les informations d'entrée représentées dans la partie d'entrée (21) sont sélectionnées en fonction d'une grandeur de la partie d'entrée (21), un nombre et/ou une valeur informative des informations de commande étant réduits avec l'augmentation de la grandeur de la partie d'entrée (21) de la surface d'affichage (5).
